# EUROPÄISCHE PATENTSCHRIFT

(11) **EP 1 742 168 B1**
(45) Veröffentlichungstag und Bekanntmachung des Hinweises auf die Patenterteilung: **20.01.2016**
(21) Anmeldenummer: 06010639.0
(22) Anmeldetag: 24.05.2006
(51) Int. Cl.: G06K 7/10, G01S 17/02, G02B 27/09

(54) **Optoelektronischer Sensor**
Optoelectronic sensor
Senseur opto-électronique

(30) Priorität: 05.07.2005 DE 102005031710
(43) Veröffentlichungstag der Anmeldung: 10.01.2007
(73) Patentinhaber: SICK AG, 79183 Waldkirch (DE)
(72) Erfinder: Nuebling, Ralf Ulrich, 79211 Denzlingen (DE)
(74) Vertreter: Ludewigt, Christoph

(56) Entgegenhaltungen:
- EP-A- 1 507 228
- WO-A-00/57229
- WO-A-01/81955
- WO-A-03/005104
- CA-A- 2 358 201
- DE-A1- 19 841 040
- GB-A- 2 398 926
- US-A- 3 670 260
- US-A- 5 414 559
- US-A1- 2003 048 819
- US-A1- 2004 067 015
- US-B1- 6 381 072

## Beschreibung

Die Erfindung betrifft einen optoelektronischen Sensor, insbesondere Zeilenkamera mit einer Empfangsoptik und einer im Bereich der Empfangsoptik angebrachten Beleuchtungsanordnung. Die Beleuchtungsanordnung besteht dabei aus mehreren in einer Linie ausgerichteten Leuchtdioden zur Ausleuchtung eines linienförmigen Erfassungsbereiches mit einer anamorphotischen Abbildungsoptik. Dieser linienförmige Erfassungsbereich wird mit der Empfangsoptik auf einen ortsauflösenden zeilenförmigen Lichtempfänger abgebildet.

Derartige optoelektronische Sensoren sind aus dem Stand der Technik bekannt und werden beispielsweise zur Objekterfassung, als auch zur Erfassung von optisch lesbaren Codes, eingesetzt.

Sensoren mit einfacher Beleuchtungsanordnung verwenden zur Ausleuchtung des Erfassungsbereiches Leuchtdioden, welche ohne zusätzliche strahlformende Elemente ausgestattet sind, so dass ein verhältnismäßig großer Anteil der von den Leuchtdioden abgegebenen Lichtmenge nicht auf den eigentlichen Erfassungsbereich fällt, was letztlich dazu führt, dass die abgegebene Lichtmenge nicht effizient genutzt wird.

Gegenüber derartigen Beleuchtungsanordnungen sind auch Sensoren bekannt, bei denen das Licht der Leuchtdioden mittels strahlformender Elemente mehr oder weniger gut auf den Erfassungsbereich konzentriert wird, wie beispielsweise aus der EP 1 507 228 A1 bekannt ist.

Unter Licht ist im Sinne der Erfindung grundsätzlich die gesamte optische Strahlung, d. h. von UV bis zur IR-Strahlung zu verstehen.

Die Effizienz der einfachen Beleuchtung ohne strahlformende Elemente ist insbesondere dann, wenn zwischen dem optoelektronischen Sensor und dem Erfassungsbereich eine große Distanz ist, sehr gering.

Bei den optoelektronischen Sensoren, deren Beleuchtung mit strahlformenden Elementen ausgestattet ist, besteht oft das Problem, dass die Lichtverteilung im Erfassungsbereich, d. h. das Beleuchtungsprofil, den Anforderungen nicht genügt. So ist beispielsweise eine möglichst homogene Lichtverteilung nicht sichergestellt. Ebenso ist es oft nicht oder nur sehr aufwendig möglich, gezielte Beleuchtungsprofile zu erzeugen, um beispielsweise den von der Empfangsoptik hervorgerufenen Randabfall durch Erhöhung der Randbeleuchtung zu kompensieren. Ein weiteres Problem tritt bei derartigen Sensoren dann auf, wenn sich das Empfangsobjektiv und die Leuchtdioden zur Beleuchtung des Erfassungsbereiches in einer gemeinsamen Linie befinden. Dadurch wird zwar erreicht, dass der optoelektronische Sensor einen großen Schärfentiefebereich hat, weil die Beleuchtung und der Empfang exakt in einer Ebene liegen. Durch das Empfangsobjektiv wird jedoch die Leuchtdiodenlinie unterbrochen, was zur Inhomogenität im Beleuchtungsprofil auf dem Erfassungsbereich führt.

Aus der WO 03/005104 A2 ist eine Anordnung zur Abbildung des von Laserdiodenbarren ausgehenden Lichts bekannt, bei der Kohärenzeffekt durch leicht versetztes Abbilden des Lichts einzelner Emissionsquellen in die Brennebene verringert werden können.

Der Erfindung liegt die Aufgabe zugrunde, einen optoelektronischen Sensor der eingangs genannten Art derart auszubilden, dass sich innerhalb des Erfassungsbereiches ein bestimmtes Beleuchtungsprofil erzeugen lässt, wobei einerseits ein optimaler Wirkungsgrad erreicht werden soll, indem möglichst viel von der abgegebenen Lichtmenge der Leuchtdioden auf den Erfassungsbereich gelenkt wird und andererseits die Energieverteilung innerhalb des Beleuchtungsprofils gezielt veränderbar ist. Darüber hinaus sollen speziell unter wirtschaftlichen Gesichtpunkten unterschiedlich große Erfassungsbereiche mit möglichst gleichartigen Komponenten oder Baugruppen realisierbar sein.

Erfindungsgemäß wird diese Aufgabe mit den Merkmalen des Anspruchs 1 und insbesondere dadurch gelöst, dass die strahlformenden Elemente Teile einer anamorphotischen Abbildungsoptik sind, bei der jeder Leuchtdiode ein gleichartig ausgeführtes Kondensorelement und eine Zylinderlinse zugeordnet sind. Dabei weisen die Leuchtdioden mit fortschreitendem Abstand zur Empfangsoptik eine unterschiedliche außeraxiale Ausrichtung zur optischen Achse der Kondensorelemente auf und darüber hinaus verändert sich der Scheitelabstand zwischen dem Kondensorelement und der Zylinderlinse ebenfalls in Abhängigkeit vom Abstand zur Empfangsoptik.

Durch diese erfindungsgemäße vom Abstand zum Empfangsobjektiv abhängige Justage der drei Komponenten: Leuchtdiode, Kondensorelement und Zylinderlinse ist es möglich, die Hauptstrahlrichtung des von der Leuchtdiode abgegebenen Lichtes zu beeinflussen, um im Erfassungsbereich ein ganz spezielles Beleuchtungsprofil zu erzeugen. Dadurch können zum Beispiel die Effekte durch den Randabfall des Empfangsobjektives ausgeglichen werden oder auch die vom Empfangsobjektiv innerhalb der Leuchtdiodenlinie hervorgerufene Störung der Homogenität in der Beleuchtungsanordnung ausgeglichen werden.

Gemäß den in den Unteransprüchen beschriebenen erfindungsgemäßen Varianten, nach denen das Kondensorelement eine plane und eine konvexe Oberfläche hat und dabei auf der, der Leuchtdiode zugewanden planen Grenzfläche ganz oder teilweise Keilflächen angebracht sind, lässt sich auch zusätzlich zu der außeraxialen Justage der Leuchtdiode zum Kondensorelement eine Veränderung der Hauptstrahlrichtung des Lichtes verwirklichen. Dadurch wird die Effizienz der Beleuchtung gegenüber der außeraxialen Justage verbessert, weil mehr Licht in das Kondensorelement eingekoppelt wird. Die konvexe Oberfläche des Kondensorelementes kann dabei z. B. eine sphärische bzw. asphärische, torische, fresnelförmige oder sonstige Kontur aufweisen.

Aus wirtschaftlichen Gesichtspunkten ist es jedoch nicht vertretbar, jedes Kondensorelement mit einem individuell angepassten Keilwinkel zu versehen. Aus diesem Grunde ist es nach einer bevorzugten Ausführungsform der Erfindung vorgesehen, zur Veränderung der Hauptstrahlrichtung des Lichtes die unterschiedlichen außeraxiale Justage und Scheitelabstände und die Verwendung von Keilwinkel gleichzeitig zu verwenden. Deshalb haben in den erfindungsgemäßen Varianten alle in der Beleuchtungsanordnung eingesetzten Kondensorelemente den gleichen Keilwinkel zur Veränderung der mittleren Hauptstrahlrichtung des Lichtes, wobei gleichzeitig die außeraxiale Ausrichtung zur Feinabstimmung in Abhängigkeit vom Abstand zur Empfangsoptik genutzt wird.

Alternativ ist es jedoch auch möglich, die Planfläche des Kondensorelementes nur teilweise mit einem Keilwinkel zu versehen, was nachfolgend beispielhaft anhand einer hälftigen Teilung näher erläutert wird. Wenn nur die Hälfte der Planfläche mit einem Keilwinkel versehen ist, wird das aus dem Kondensorelement austretende Licht in zwei Hauptstrahlrichtungen aufgeteilt. Dabei ist der Winkel zwischen den beiden Hauptstrahlrichtungen vom Keilwinkel und vom Brechungsindex des Kondensorelementes abhängig. Die Energieaufteilung zwischen den beiden Hauptstrahlrichtungen ist dabei im Wesentlichen abhängig von den Flächenanteilen (mit und ohne Keilwinkel) auf der Planfläche des Kondensorelementes. Aufgrund der Tatsache, dass beide Hauptstrahlrichtungen von einem Ausgangspunkt ausgehen und sich durch die anamorphotische Abbildungsoptik als ausgedehnte Linie in Richtung des Erfassungsbereiches bewegen, tritt zwangsläufig eine mehr oder weniger große Überlagerung der beiden Lichtanteile ein. Abhängig davon ist dann natürlich die Lichtverteilung im Erfassungsbereich, d. h. das Beleuchtungsprofil.

Eine ähnliche Auswirkung wie in der zuvor beschriebenen Alternative kann dadurch erreicht werden, dass die Planfläche des Kondensorelementes in zwei entgegengesetzt wirkende Keilwinkel aufgeteilt wird. In diesem Fall kann die optische Keilwirkung symmetrischer verteilt werden, was die Effizienz bei der Einkoppelung des Lichtes in das Kondensorelement weiter erhöht.

Eine besonders bevorzugte Ausführungsform der Erfindung stellt die Kombination von Keilwinkel und der außeraxialen Justage der Leuchtdioden und der Versetzung der Scheitelabstände zum Kondensorelement dar, weil in dieser Variante die Planfläche des Kondensorelementes im Mittelbereich des Kondensorelementes rechtwinklig zur optischen Achse ausgerichtet ist, während die beiden im Außenbereich angrenzenden Abschnitte zwei, in Lichtrichtung gesehen, entgegengesetzt wirkende optische Keilwinkel aufweisen. Dadurch ist es möglich, dass alle innerhalb der Beleuchtungsanordnung linienförmig angeordneten Kondensorelemente gleichartig ausgeführt sein können, wobei die jeweilige Nutzung der entsprechenden Flächenabschnitte im Wesentlichen vom Maß der außeraxialen Justage der Leuchtdioden zum Kondensorelement abhängt. Dies bedeutet, dass zum Beispiel bei den nahe am Empfangsobjektiv angeordneten Kondensorelementen, bei denen die außeraxiale Justage der Leuchtdioden zum Kondensorelement noch relativ gering ist, überwiegend der Mittelteil des Kondensorelementes genutzt wird. Dagegen kann mit zunehmendem Abstand zum Empfangsobjektiv und damit auch zunehmender außeraxialen Justage der Leuchtdioden zum Kondensorelement immer mehr die außenliegende Keilfläche mitgenutzt werden.

Weitere Freiheitsgrade hinsichtlich der Optimierung des Beleuchtungsprofils und Steigerung der Effizienz der Beleuchtungsanordnung sind nach der Erfindung dadurch gegeben, dass sowohl die Flächenanteile der beiden Keilwinkelanteile, als auch die Größe der Keilwinkel unterschiedlich ausgeführt sind. Dadurch ist es möglich, die baugleichen Kondensorelemente innerhalb der linienförmigen Beleuchtungsanordnung unterschiedlich zu bestücken. Darunter ist zu verstehen, dass die Kondensorelemente um die optische Achse um 180° gedreht eingesetzt werden. Damit wird erreicht, dass zum Beispiel in der Nähe des Empfangsobjektives überwiegend der ohne Keil versehene Mittelteil genutzt wird. Mit zunehmender Entfernung zum Empfangsobjektiv wird dann der z. B. schwächere Keilwinkel genutzt, während im Außenbereich dann der stärkere Keilwinkel zum Tragen kommt.

Besonders dann, wenn ein lang ausgedehnter Erfassungsbereich in einem großen Abstand zum Sensor beleuchtet werden muss, ist es nach der Erfindung von Vorteil, wenn jede einzelne Leuchtdiode durch eine Leuchtdiodengruppe ersetzt wird. Gleichermaßen wird dann auch jedes Kondensorelement durch eine Kondensorelementengruppe ersetzt. Dabei sind alle Leuchtdioden innerhalb der Leuchtdiodengruppe in gleicher Weise zu den einzelnen Kondensorelementen innerhalb der Kondensorelementengruppe justiert.

Mit der erfindungsgemäßen Variante, in der eine einzelne Leuchtdiode durch eine Gruppe von mehreren Leuchtdioden und jedes Kondensorelement durch eine Kondensorelementengruppe ersetzt werden, kann die Beleuchtungsstärke im Erfassungsbereich wesentlich erhöht werden. Da jedoch eine Leuchtdiodengruppe bzw. eine Kondensorelementengruppe immer nur einen relativ kleinen Ausschnitt aus der gesamten linienförmigen Beleuchtungsanordnung abdecken, ist es möglich, dass innerhalb dieser Leuchtdioden- bzw. Kondensorelementengruppe eine für alle in der . Gruppe eingesetzten Komponenten die gleiche axiale bzw. außeraxiale Justage vorhanden ist.

Die Varianz bezüglich der vom Abstand zum Empfangsobjektiv abhängigen Justage findet in diesem Falle dann nur von einer Leuchtdiodengruppe bzw. Kondensorelementengruppe zur nächsten Gruppe statt.

Eine unter den Gesichtspunkten der wirtschaftlichen Herstellbarkeit sinnvolle Ausführungsform ist dadurch gegeben, dass die Kondensorelemente der Kondensorelementengruppe als Kunststofflinsen direkt in eine Trägerplatte eingespritzt werden. Dadurch ist kein weiteres mechanisches Konstruktionselement zur Aufnahme der Kondensorelemente notwendig und darüber hinaus muss keine Justage der einzelnen Kondensorelemente zueinander durchgeführt werden. Des Weiteren kann die Trägerplatte mit den eingespritzten Kondensorelementen über eine einfache justierbare Verbindung mit einer Elektronikkarte, auf welcher die einzelnen Leuchtdioden exakt positioniert aufgebracht sind, verbunden werden. Insbesondere dann, wenn eine definierte axiale bzw. außeraxiale Justage zwischen den Leuchtdioden und den Kondensorelementen eingestellt werden soll, kann dies für alle Komponenten innerhalb der Gruppe in einem Justageschritt gleichzeitig durchgeführt werden.

Eine speziell unter wirtschaftlichen Gesichtspunkten optimale Lösung zur Verbindung der Trägerplatte mit der Elektronikkarte wird dadurch erreicht, dass die dafür vorgesehenen Verbindungselemente ebenfalls in die Trägerplatte eingespritzt werden.

In einer weiteren bevorzugten Ausführungsform der Erfindung ist der Temperaturausdehnungskoeffizient der Trägerplatte, in welche die Kondensorelemente eingespritzt werden, möglichst genau an den Temperaturausdehnungskoeffizient der Elektronikkarte angepasst. Dadurch wird erreicht, dass auch innerhalb eines relativ großen Temperaturbereiches keine unerwünschten Veränderungen in der optischen Zuordnung von Leuchtdiode und Kondensorelement auftreten.

Im Folgenden wird die Erfindung an Hand von Ausführungsbeispielen unter Bezugnahme auf die Zeichnungen im Einzelnen erläutert.

In den Zeichnung zeigen:
- Figur 1: eine schematische Seitenansicht eines optoelektronischen Sensors mit Empfangsoptik und Beleuchtungsanordnung
- Figur 2: eine schematische Draufsicht entsprechend der Fig. 1
- Figur 3: eine schematische Seitenansicht eines optoelektronischen Sensors mit Empfangsoptik und Beleuchtungsanordnung, bei welcher die Kondensorelemente mit einer keilförmigen Grenzfläche ausgestatten sind.
- Figur 4: eine Schnittzeichnung von einem Kondensorelement mit zwei Keilwinkel.
- Figur 5a: eine Schnittzeichnung von einem Kondensorelement mit einem Mittelbereich und zwei Keilwinkel.
- Figur 5b: eine Seitenansicht von Figur 5a.
- Figur 6: eine schematische Seitenansicht eines optoelektronischen Sensors mit einer Leuchtdiodengruppe und einer Kondensorelementengruppe.

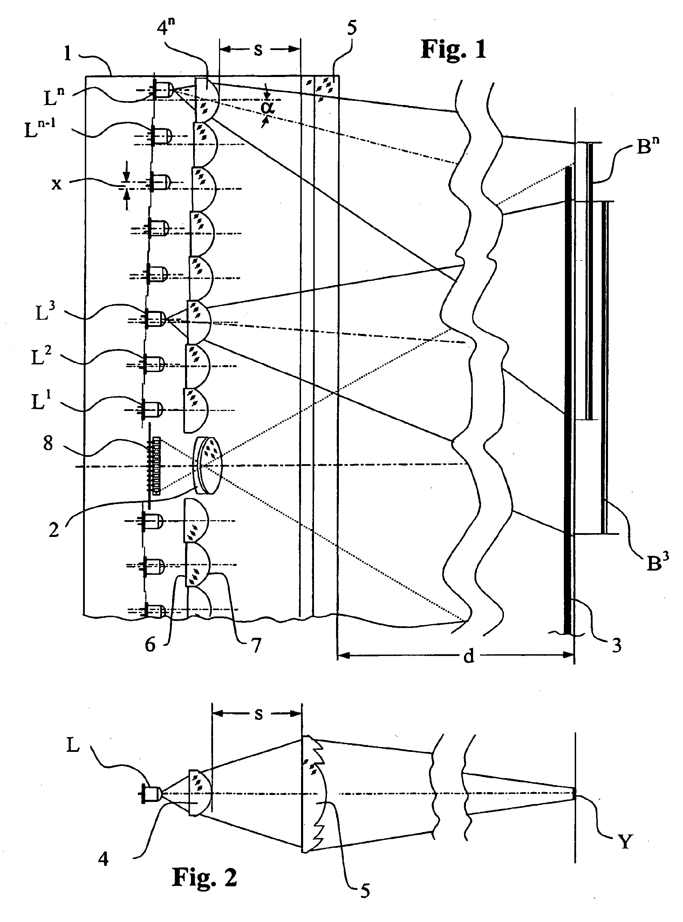

Figur 1 zeigt in einer schematischen Seitenansicht einen optoelektronischen Sensor 1 mit einer Empfangsoptik 2 und einer Beleuchtungsanordnung, bei der sich das Empfangssystem und die Beleuchtungsanordnung gemeinsam in der Zeichnungsebene befinden. Bestandteile der Beleuchtungsanordnung sind dabei die Leuchtdioden Lⁱ, die entlang einer Linie oberhalb und unterhalb der Empfangsoptik 2, bzw. einem zur Empfangsoptik 2 ausgerichteten, ortsauflösenden, zeilenförmigen Lichtempfänger 8, angeordnet sind. Weiterhin ist jeder der Leuchtdioden L' ein strahlformendes Kondensorelement 4ⁱ zugeordnet. Die Kondensorelemente 4ⁱ bilden zusammen mit einer Zylinderlinse 5 eine anamorphotische Abbildungsoptik, die das Licht einer Leuchtdiode Lⁱ in einem Abstand d außerhalb des optoelektronischen Sensors 1 zu einer Beleuchtungslinie Bⁱ formt. Das strahlformende Kondensorelement 4ⁱ ist dabei vom Typ einer Plan-Konvexlinse, mit einer den Leuchtdioden Lⁱ zugewandten Planfläche 6 und einer konvexen Oberfläche 7. Die Form der konvexen Oberfläche kann dabei eine sphärische bzw. asphärische, torische oder fresnelförmige Kontur aufweisen. Die Zylinderlinse 5 kann aus mehreren Teillinsen zusammengesetzt sein oder auch als gezogene oder im Strangpressverfahren hergestellte Kunststoff- oder Fresnellinse ausgeführt sein.

Durch den Einsatz von mehreren Leuchtdioden Lⁱ mit mehreren strahlformenden Kondensorelementen 4ⁱ werden mehrere Beleuchtungslinien Bⁱ in einem Erfassungsbereich 3 zu einer resultierenden Beleuchtungslinie überlagert. Erfindungsgemäß ist dabei vorgesehen, die Art und Weise der Überlagerung der einzelnen Beleuchtungslinien Bⁱ zu beeinflussen um dadurch die Lichtverteilung, d. h. das Beleuchtungsprofil in der resultierenden Beleuchtungslinie variieren zu können. Zu diesem Zweck ist es vorgesehen, die Leuchtdioden Lⁱ außeraxial zu den jeweiligen Kondensorelementen 4ⁱ auszurichten. Abhängig vom Betrag und dem Vorzeichen der außeraxialen Ausrichtung x wird die Hauptstrahlrichtung um den Winkel α von der optischen Achse des Kondensorelementes abweichen. Damit ist es möglich, die Ausbreitungsrichtung der einzelnen Beleuchtungslinien Bⁱ zu beeinflussen. Gleichzeitig ist es möglich, über die Veränderung des Scheitelabstandes s zwischen dem Kondensorelement 4ⁱ und der Zylinderlinse 5 die Lichtverteilung innerhalb der einzelnen Beleuchtungslinie Bⁱ zu variieren. Mit Hilfe dieser beiden Stellgrößen, d. h. der außeraxialen Ausrichtung x und dem jeweiligen Scheitelabstandes s, kann die Überlagerung der einzelnen Beleuchtungslinien Bⁱ so beeinflusst werden, dass gezielte Beleuchtungsprofile in der resultierenden Beleuchtungslinie auf dem Erfassungsbereich 3 erzeugt werden können.

In Figur 2 wird eine schematische Draufsicht entsprechend der Figur 1 gezeigt. In dieser Projektion ist erkennbar, dass die Zylinderlinse 5 (hier symbolisch als eine zylindrische Fresnellinse dargestellt) in dieser Achse ebenfalls eine konvexe Wirkung hat. Ferner ist aus dieser Figur 2 auch zu sehen, dass die Breite Y der Beleuchtungslinie Bⁱ und somit die Intensität durch den Scheitelabstand s verändert werden kann.

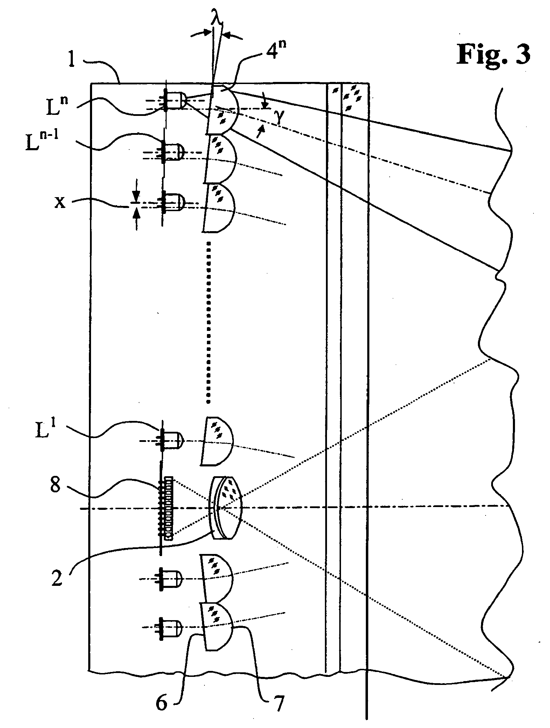

In der schematischen Seitenansicht des optoelektronischen Sensors 1, entsprechend Figur 3, sind die Kondensorelemente 4ⁱ auf der, den Leuchtdioden Lⁱ zugewandten planen Seite mit einer keilförmigen Grenzfläche ausgestattet. Dadurch ist die plane Lichteintrittsfläche 6 der Kondensorelemente 4ⁱ unter einem Winkel λ zur optischen Achse des Kondensorelementes schräggestellt. Auf diese Weise wird auch dann die Hauptstrahlrichtung des Lichtbündels nach dem Austritt aus dem Kondensorelement abgelenkt, da keine außeraxiale Aufrichtung x zwischen der Leuchtdiode und dem Kondensorelement vorhanden ist. Gemäß der Erfindung ist es jedoch möglich, die gesamte Veränderung der Hauptstrahlrichtung des Lichtbündels um den Winkel γ durch eine Kombination aus der außeraxialen Ausrichtung und der keilförmigen Grenzfläche zu erzeugen. Diese Kombination hat den Vorteil, dass jede Teilkomponente nur eine geringere Winkelablenkung erbringen muss, als wenn die gesamte Winkelablenkung von nur einer Komponenten erzeugt werden müsste. Dies wirkt sich neben einer besseren Abbildungsqualität insbesondere auf die Effizienz bei der Einkoppelung der Lichtmenge in das Kondensorelement aus, wodurch die Beleuchtungsstärke in dem Erfassungsbereich verbessert ist.

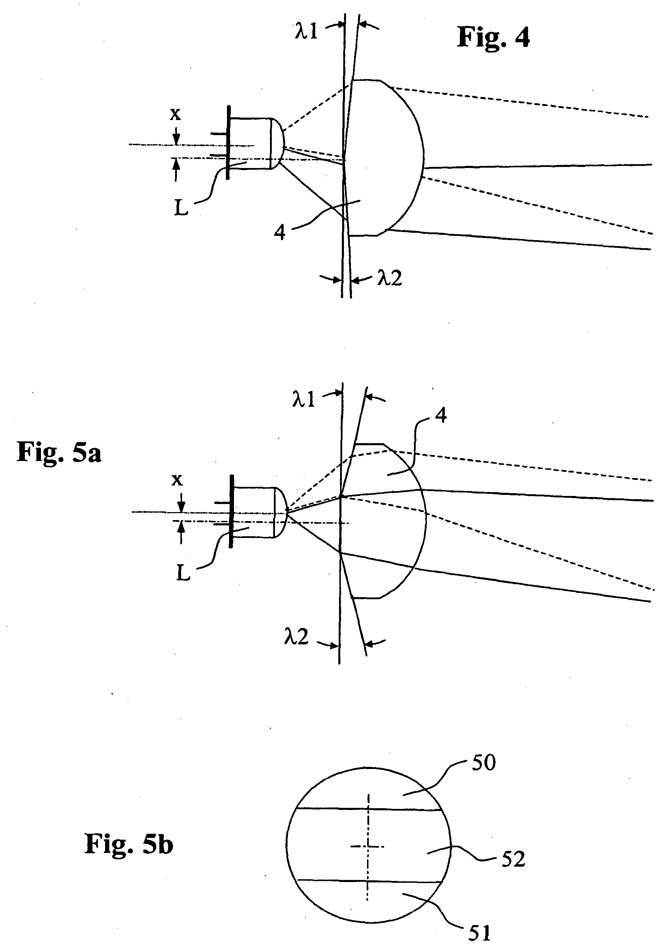

Eine spezielle Ausführungsvariante der Kondensorelemente 4 ist in Figur 4 dargestellt. Hier sind auf der, der Leuchtdiode L zugewandten planen Seite zwei entgegengesetzt wirkende Keilflächen mit den Keilwinkel λ1 und λ2 angeordnet. Dadurch wird erreicht, dass das von der Leuchtdiode L abgegebene Licht nach dem Austritt aus dem Kondensorelement 4 in zwei Hauptstrahlrichtungen aufgeteilt wird. Der Winkel, den diese beiden Hauptstrahlrichtungen zur Symmetrieachse des Kondensorelementes 4 bzw. zueinander bilden, wird durch die beiden Keilwinkel λ1 und λ2 und ggf. der zusätzlichen außeraxialen Ausrichtung x zwischen der Leuchtdiode L und dem Kondensorelement 4 vorgegeben. Mit dieser Anordnung von zwei Hauptstrahlrichtungen und damit auch von zwei zueinander versetzen einzelnen Beleuchtungslinien Bⁱ steht ein weiterer Freiheitsgrad zur Optimierung des Beleuchtungsprofils zur Verfügung.

Analog zu der in Figur 4 gezeigten Variante können wie in Figur 5a und 5b dargestellt, die beiden entgegengesetzt wirkenden Keilflächen nur an den beiden Randbereichen der planen Grenzfläche des Kondensorelementes 4 angebracht sein. Wie speziell aus Figur 5b zu ersehen, entstehen somit die beiden mit einem Keilwinkel versehenen Kreisabschnitte 50 und 51 sowie ein zentraler mittlerer Flächenanteil 52 ohne zusätzliche Keilwirkung. Diese Ausführungsvariante, verbunden mit einer zusätzlichen außeraxialen Ausrichtung x, eröffnet viele Wege zur Optimierung des gewünschten Beleuchtungsprofils. So können zum Beispiel die drei Flächenanteile 50, 51 und 52 unterschiedlich groß ausgeführt werden. Ebenso ist es möglich, die beiden Keilwinkel λ1 und λ2 unterschiedlich auszuführen und darüber hinaus noch den Betrag der zusätzlichen außeraxialen Ausrichtung x vorzugeben.

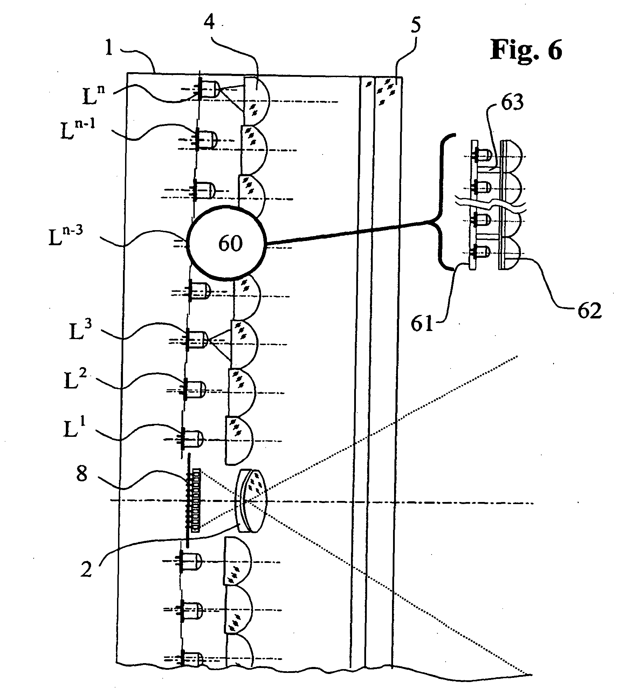

Wenn mit dem optoelektronischen Sensor 1 ein lang ausgedehnter Erfassungsbereich 3 ausgeleuchtet werden muss und darüber hinaus sich der Erfassungsbereich in einem großen Abstand d zum optoelektronischen Sensor befindet, ist es oft notwendig, innerhalb der Linie in der Beleuchtungsanordnung eine große Anzahl von Leuchtdioden Lⁱ inklusive der entsprechenden Kondensorelemente 4ⁱ zu verwenden. In diesem Fall ist es nach der Erfindung auch vorgesehen, wie in Figur 6 an beispielsweise der Leuchtdiode Lⁿ⁻³ dargestellt, eine einzelne Leuchtdiode und das entsprechende Kondensorelement durch eine Leuchtdioden- und Kondensorelementengruppe 60 zu ersetzen. Da jedoch die Leuchtdiodengruppe bzw. die Kondensorelementengruppe 60 nur einen relativ kleinen Ausschnitt aus der gesamten linienförmigen Beleuchtungsanordnung abdeckt, ist es möglich, dass innerhalb dieser Leuchtdioden- bzw. Kondensorelementengruppe 60 eine für alle in der Gruppe eingesetzten Komponenten die gleiche axiale bzw. außeraxiale Justage sowie der gleiche Scheitelabstand s zur Zylinderlinse 5 vorhanden ist.

Die Varianz bezüglich der vom Abstand zum Empfangsobjektiv abhängigen Justage findet in diesem Falle dann von einer Leuchtdiodengruppe bzw. Kondensorelementengruppe zur nächsten Gruppe statt.

Aus Figur 6 ist weiterhin zu ersehen, dass alle einer Leuchtdiodengruppe zugehörenden Leuchtdioden auf einer gemeinsamen Elektronikkarte 61 positioniert angeordnet sind. Ebenso sind alle Kondensorelemente in der Kondensorelementengruppe auf einer gemeinsamen Trägerplatte 62 befestigt. Zur Justage und zur Einstellung der gewünschten außeraxialen Zuordnung wird die Elektronikkarte 61 und die Trägerplatte 62 mit mehreren Verbindungselementen 63 positionsgenau miteinander verbunden. Bei der ggf. daran anschließenden vorherigen bzw. nachfolgenden Leuchtdioden-/ Kondensorelementengruppe wird dann zur Erzeugung des bestimmten Beleuchtungsprofils eine geänderte Zuordnung zwischen der Elektronikkarte 61 und der Trägerplatte 62 eingestellt. Mit dieser gruppenweisen Anordnung von Leuchtdioden und Kondensorelementen kann die Endmontage der Beleuchtungsanordnung dann wesentlich vereinfacht werden. Gleichzeitig kann auch die Baugruppenmontage bzw. -justage der Leuchtdioden-/ Kondensorelementengruppe sehr vereinfacht werden, wenn z. B. alle Kondensorelemente einer Kondensorelementengruppe als Kunstoffelemente im Spritzgussverfahren in eine gemeinsame Trägerplatte 62 eingespritzt werden. Dadurch wird über das Spritzgusswerkzeug die exakte Positionierung der Kondensorelemente in der Trägerplatte 62 sichergestellt. Ebenso verhält es sich mit der Positionierung der Leuchtdioden, welche mit hochgenauen Bestückungsautomaten exakt auf der Elektronikkarte 61 angeordnet werden. Mit nur einem Montageschritt kann somit sichergestellt werden, dass alle Leuchtdioden und alle Kondensorelemente innerhalb der Gruppe exakt aufeinander ausgerichtet sind. Von besonderem Vorteil hinsichtlich der Justagegenauigkeit ist es, wenn die Elektronikkarte 61 und die Trägerplatte 62 aus Werkstoffen hergestellt werden, die den gleichen Temperaturausdehnungskoeffizienten haben, weil dadurch die eingestellte Justagegenauigkeit selbst über einen großen Temperaturbereich erhalten bleibt.

## Patentansprüche

1. Optoelektronischer Sensor (1) insbesondere Zeilenkamera mit einer Empfangsoptik (2) und einer im Bereich der Empfangsoptik angebrachten Anordnung von mehreren in einer Linie ausgerichteten Leuchtdioden (Lⁱ) zur Ausleuchtung eines Erfassungsbereiches (3) mit einer anamorphotischen Abbildungsoptik, wobei jeder Leuchtdiode (Lⁱ) erstens ein strahlformendes optisches Kondensorelement (4ⁱ), welches auf der den Leuchtdioden zugewandten Seite eine plane Grenzfläche (6) und auf der gegenüberliegenden Seite (7) eine sphärische, asphärische oder torische Oberfläche hat und zweitens eine Zylinderlinse (5) zugeordnet ist, **dadurch gekennzeichnet, dass** die strahlformenden optischen Kondensorelemente (4ⁱ) in der gesamten Anordnung gleichartig ausgeführt sind und mit fortschreitendem Abstand zur Empfangsoptik (2) die Leuchtdioden (Lⁱ) eine unterschiedliche außeraxiale Ausrichtung (x) zur optischen Achse der Kondensorelemente (4ⁱ) aufweisen.

2. Optoelektronischer Sensor nach Anspruch 1, **dadurch gekennzeichnet, dass** die strahlformenden optischen Kondensorelemente (4ⁱ) mit fortschreitendem Abstand zur Empfangsoptik (2) einen unterschiedlichen Scheitelabstand (s) zwischen dem Kondensorelement (4ⁱ) und der Zylinderlinse (5) aufweisen.

3. Optoelektronischer Sensor nach Anspruch 1 oder 2, **dadurch gekennzeichnet, dass** die gesamte plane Grenzfläche des Kondensorelementes abweichend vom rechten Winkel zur optischen Achse des Kondensorelementes angeordnet ist und dadurch die Grenzfläche, in Lichtrichtung gesehen, einen optischen Keilwinkel aufweist.

4. Optoelektronischer Sensor nach Anspruch 1 oder 2, **dadurch gekennzeichnet, dass** nur ein Teil der gesamten planen Grenzfläche abweichend vom rechten Winkel der optischen Achse des Kondensorelementes angeordnet ist und dadurch, in Lichtrichtung gesehen, nur maximal die Hälfte der Grenzflächen einen optischen Keilwinkel aufweist.

5. Optoelektronischer Sensor nach Anspruch 1 oder 2, **dadurch gekennzeichnet, dass** die plane Grenzfläche des Kondensorelementes zwei, in Lichtrichtung gesehen, entgegengesetzt wirkende optische Keilwinkel aufweist.

6. Optoelektronischer Sensor nach Anspruch 1 oder 2, **dadurch gekennzeichnet, dass** die plane Grenzfläche im Mittelbereich des Kondensorelementes rechtwinklig zur optischen Achse ausgerichtet ist, während die beiden im Außenbereich angrenzenden Abschnitte zwei, in Lichtrichtung gesehen, entgegengesetzt wirkende optische Keilwinkel aufweisen.

7. Optoelektronischer Sensor nach Anspruch 5 oder 6, **dadurch gekennzeichnet, dass** die beiden optischen Keilwinkel unterschiedliche große Flächenanteile der planen Grenzfläche des Kondensorelementes einnehmen.

8. Optoelektronischer Sensor nach Anspruch 5 bis 7, **dadurch gekennzeichnet, dass** die beiden optischen Keilwinkel unterschiedlich groß sind.

9. Optoelektronischer Sensor nach einem der vorhergehenden Ansprüche, **dadurch gekennzeichnet, dass** eine Leuchtdiode mit dem dazugehörenden strahlformenden optischen Kondensorelement durch eine Leuchtdiodengruppe mit einer Kondensorelementengruppe ersetzt ist, wobei innerhalb einer Leuchtdiodengruppe bzw. einer Kondensorelementengruppe die einzelnen Komponenten die gleichen optischen und geometrischen Eigenschaften besitzen.

10. Optoelektronischer Sensor nach Anspruch 9, **dadurch gekennzeichnet, dass** die Kondensorelementengruppe aus mehreren gleichartigen Kunststofflinsen besteht, welche mittels eines Spritzgussverfahrens in eine Trägerplatte eingespritzt werden.

11. Optoelektronischer Sensor nach Anspruch 9 oder 10, **dadurch gekennzeichnet, dass** die einzelnen Leuchtdioden der Leuchtdiodengruppe auf einer gemeinsamen Elektronikkarte angeordnet sind.

12. Optoelektronischer Sensor nach Anspruch 10 und 11, **dadurch gekennzeichnet, dass** die Trägerplatte und Elektronikkarte mit mehreren Verbindungselementen justierbar verbunden sind.

13. Optoelektronischer Sensor nach Anspruch 12, **dadurch gekennzeichnet, dass** die Verbindungselemete zwischen Trägerplatte und Elektronikkarte in die Trägerplatte miteingespritzt werden.

14. Optoelektronischer Sensor nach Anspruch 10 und 11, **dadurch gekennzeichnet, dass** der Temperaturausdehnungskoeffizient der Trägerplatte und der Elektronikkarte einen weitestgehend gleichen Wert aufweisen.

## Claims

1. An optoelectronic sensor (1), in particular a line camera, having a receiving optics (2) and an arrangement of a plurality of light emitting diodes (LEDs) (Lⁱ) aligned in a line and arranged in a vicinity of the receiving optics for illuminating a receiving area (3) with an anamorphic imaging optics, wherein firstly a beam-shaping optical condenser element (4ⁱ), which has a planar surface (6) on a side facing the LEDs and a spherical, aspherical, or toric surface on the opposite side (7), and secondly a cylindrical lens (5) is associated with each LED (Lⁱ),
**characterized in that** the beam-shaping condenser elements (4ⁱ) in the entire arrangement are of like construction and the LEDs (Lⁱ) have a different axial offset with respect to the optical axis of the condenser elements (4ⁱ) with increasing distance from the reception optics (2).

2. An optoelectronic sensor according to claim 1,
**characterized in that** the beam-shaping optical condenser elements (4ⁱ) have a different peak distance (s) between the condenser elements (4ⁱ) and the cylindrical lens (5) with increasing distance from the receiving optics (2).

3. An optoelectronic sensor according to claim 1 or 2,
**characterized in that** the entire planar surface of the condenser elements is arranged with a deviation from a right angle with respect to the optical axis of the condenser elements, and therefore the planar surface comprises, in light direction, an optical wedge angle.

4. An optoelectronic sensor according to claim 1 or 2,
**characterized in that** only a part of the entire planar surface is arranged with a deviation from the right angle with respect to the optical axis of the condenser elements and therefore at most half of the planar surface comprises, in light direction, an optical wedge angle.

5. An optoelectronic sensor according to claim 1 or 2,
**characterized in that** the planar surface of the condenser elements comprises, in light direction, two optical wedge angles working in opposite directions.

6. An optoelectronic sensor according to claim 1 or 2,
**characterized in that** the planar surface is arranged perpendicular with respect to the optical axis in a central portion of the condenser element, while the two adjacent peripheral sections comprise, in light direction, two wedge angles working in opposite directions.

7. An optoelectronic sensor according to claim 5 or 6,
**characterized in that** the two optical wedge angles have a different area share of the planar surfaces of the condenser elements.

8. An optoelectronic sensor according to any of claims 5 to 7,
**characterized in that** the optical wedge angles are of different magnitudes.

9. An optoelectronic sensor according to any of the preceding claims,
**characterized in that** an LED with the associated beam-shaping optical condenser elements is replaced with an LED subassembly having a condenser element subassembly, wherein the individual components within an LED subassembly and a condenser element subassembly, respectively, have like optical and geometric characteristics.

10. An optoelectronic sensor according to claim 9,
**characterized in that** the condenser element subassembly comprises a plurality of like plastic lenses molded into a support plate by injection molding.

11. An optoelectronic sensor according to claim 9 or 10,
**characterized in that** the individual LEDs of the LED subassembly are arranged on a common electronic circuit board.

12. An optoelectronic sensor according to claim 10 and 11,
**characterized in that** the support plate and the circuit board are adjustably connected with a plurality of connection elements.

13. An optoelectronic sensor according to claim 12,
**characterized in that** the connection elements between support plate and electronic circuit board are injection molded together with the support plate.

14. An optoelectronic sensor according to claim 10 and 11,
**characterized in that** the coefficient of thermal expansion of the support plate and the electronic circuit board are substantially the same.

## Revendications

1. Capteur optoélectronique (1), en particulier caméra linéaire, comprenant une optique de réception (2) et un agencement, installé dans la région de l'optique de réception, de plusieurs diodes électroluminescentes (L') orientées dans une ligne, pour l'éclairage d'une zone de détection (3) et comprenant une optique d'imagerie anamorphotique, dans lequel à chaque diode électroluminescente (L') sont associés d'une part un élément condenseur optique (4') de mise en forme du rayonnement, qui a sur le côté tourné vers les diodes électroluminescentes une surface limite plane (6) et qui a sur le côté opposé (7) une surface sphérique, asphérique ou torique, et d'autre part une lentille cylindrique (5), **caractérisé en ce que** les éléments condenseurs optiques (4') de mise en forme du rayonnement sont réalisés de même type dans la totalité de l'agencement et les diodes électroluminescentes (L') présentent, alors que leur distance vis-à-vis de l'optique de réception (2) augmente, une orientation non axiale (x) différente vis-à-vis de l'axe optique des éléments condenseurs (4').

2. Capteur optoélectronique selon la revendication 1, **caractérisé en ce que** les éléments condenseurs optiques (4') de mise en forme du rayonnement présente, alors que leur distance vis-à-vis de l'optique de réception (2) augmente, une distance au sommet (s) différente entre l'élément condenseur (4') et la lentille cylindrique (5).

3. Capteur optoélectronique selon la revendication 1 ou 2, **caractérisé en ce que** la surface limite plane totale de l'élément condenseur est agencée sous un angle différent d'un angle droit par rapport à l'axe optique de l'élément condenseur, et la surface limite présente de ce fait, vu dans la direction de la lumière, un angle de calage optique.

4. Capteur optoélectronique selon la revendication 1 ou 2, **caractérisé en ce que** seule une partie de la totalité de la surface limite plane est agencée sous un angle différent d'un angle droit par rapport à l'axe optique de l'élément condenseur et par conséquent, seule au maximum la moitié des surfaces limite présentent, vues dans la direction de la lumière, un angle de calage optique.

5. Capteur optoélectronique selon la revendication 1 ou 2, **caractérisé en ce que** la surface limite plane de l'élément condenseur comporte deux angles de calage optique dont les effets sont opposés, vus dans la direction de la lumière.

6. Capteur optoélectronique selon la revendication 1 ou 2, **caractérisé en ce que**, dans la zone médiane de l'élément condenseur, la surface limite plane est orientée en angle droit par rapport à l'axe optique, alors que les deux portions adjacentes dans la zone extérieure comportent deux angles de calage optique dont les effets sont opposés, vus dans la direction de la lumière.

7. Capteur optoélectronique selon la revendication 5 ou 6, **caractérisé en ce que** les deux angles de calage optique occupent des parts surfaciques de tailles différentes de la surface limite plane de l'élément condenseur.

8. Capteur optoélectronique selon la revendication 5 à 7, **caractérisé en ce que** les deux angles de calage optique sont de tailles différentes.

9. Capteur optoélectronique selon l'une des revendications précédentes, **caractérisé en ce qu'**une diode électroluminescente avec l'élément condenseur optique de mise en forme du rayonnement qui lui est associé est remplacée par un groupe de diodes électroluminescentes avec un groupe d'éléments condenseurs, et à l'intérieur d'un groupe de diodes électroluminescentes ou respectivement d'un groupe d'éléments condenseurs les composantes individuelles possèdent les mêmes propriétés optiques et géométriques.

10. Capteur optoélectronique selon la revendication 9, **caractérisé en ce que** le groupe d'éléments condenseurs est constitué de plusieurs lentilles en matière plastique de même type, qui sont injectées dans une plaque support au moyen d'une procédure de coulée par injection.

11. Capteur optoélectronique selon la revendication 9 ou 10, **caractérisé en ce que** les diodes électroluminescentes individuelles du groupe de diodes électroluminescentes sont agencées sur une carte électronique commune.

12. Capteur optoélectronique selon la revendication 10 et 11, **caractérisé en ce que** la plaque porteuse et la carte électronique sont reliées avec plusieurs éléments de liaison de manière ajustable.

13. Capteur optoélectronique selon la revendication 12, **caractérisé en ce que** les éléments de liaison entre la plaque porteuse et la carte électronique sont injectés conjointement dans la plaque porteuse.

14. Capteur optoélectronique selon la revendication 10 et 11, **caractérisé en ce que** le coefficient de dilatation thermique de la plaque porteuse et celui de la carte électronique ont une valeur largement égale.
